# NEUE EUROPÄISCHE PATENTSCHRIFT

(11) **EP 0 607 887 B2**
(45) Veröffentlichungstag und Bekanntmachung des Hinweises auf die Entscheidung über den Einspruch: **21.03.2001**
(45) Hinweis auf die Patenterteilung: 07.10.1998
(21) Anmeldenummer: 94100524.1
(22) Anmeldetag: 14.01.1994
(51) Int. Cl.: F25J 3/04, B01D 3/00

(54) **Anlage zur Tieftemperaturzerlegung von Luft**
Apparatus for the low temperature air separation
Dispositif pour la séparation d'air à basse température

(30) Priorität: 22.01.1993 DE 4301712
(43) Veröffentlichungstag der Anmeldung: 27.07.1994
(73) Patentinhaber: Linde Aktiengesellschaft, 65189 Wiesbaden (DE)
(72) Erfinder: Moll, Anton, Dipl.-Phys., D-82399 Raisting (DE); Kreis, Helmut, Dipl.-Ing., D-81479 München (DE); Stiegler, Karl-Heinz, Dipl.-Ing., D-84524 Neuötting (DE)
(74) Vertreter: Kasseckert, Rainer

(56) Entgegenhaltungen:
- EP-A- 0 434 510
- EP-A- 0 519 688
- FR-A- 703 029
- GB-A- 675 874
- US-A- 4 476 069
- CHEMISCHE TECHNIK, November 1991, LEIPZIG Seiten 409 - 415 PIETRO BOMIO 'REKTIFIKATION UND ABSORPTION MIT GEORDNETEN PACKUNGEN'
- Lockett, M.J.:"The trend from trays to packing for the cryogenic distillation of air", Meeting of EFChE, 1992
- Kister, H.Z.:"Distillation Operation", Ed. McGraw-Hill Inc., New York, S. 34-69
- "INTALOX HIGH-PERFORMANCE SEPARATION SYSTEMS", Prospekt der Fa. Norton Company, Akron, Ohio, USA, S. 12 und 15, 1987
- "PACKED TOWER INTERNALS", Bulletin KI-6, Koch Engineering Company, Inc., 1989

## Beschreibung

Die Erfindung betrifft eine Anlage gemäß dem Oberbegriff von Anspruch 1.

Derartige Luftzerlegungsanlagen dienen zur Gewinnung von Sauerstoff, Stickstoff und/oder Edelgasen aus Luft. Die Grundlagen ihres Aufbaus und ihrer Funktionsweise sind beispielsweise aus der Monographie "Tieftemperaturtechnik" von Hausen/Linde (2. Auflage, 1985) oder aus einem Aufsatz von Latimer in Chemical Engineering Progress (Vol. 63, No.2, 1967, Seite 35) bekannt. Seit einigen Jahren ist es üblich, in Rektifiziersäulen von Luftzerlegern Füllkörper oder Packungen, insbesondere geordnete Packungen einzusetzen. Deren Wirksamkeit hängt sehr stark von der gleichmäßigen Benetzung ihrer Oberfläche mit Rücklaufflüssigkeit ab. Daher wird oberhalb eines Packungsabschnitts ein Flüssigkeitsverteiler angeordnet, der die nach unten strömende Flüssigkeit möglichst homogen über den Kolonnenquerschnitt verteilen soll.

Luftzerlegungsanlagen werden in vielen Fällen auch im Normalbetrieb nicht mit konstantem Durchsatz gefahren. Dies ist insbesondere dann der Fall, wenn ein erzeugtes Produkt direkt einem weiteren Prozeß zugeführt wird, der nicht stationär, sondern beispielsweise periodisch betrieben wird. Aber auch bei anderen Anwendungen von Luftzerlegem besteht das Bedürfnis, den Durchsatz der Anlage gelegentlich zu verändern. Insbesondere beim Anfahren einer jeden Luftzerlegungsanlage treten die gleichen Probleme auf.

Verringert man nun beispielsweise die in die Anlage eingeführte Luftmenge, vergeht einige Zeit, bis an allen Stellen der Luftzerlegersäule(n) die der neuen Belastung entsprechenden stationären Gleichgewichtszustände erreicht sind. Dies führt dazu, daß bei bisher bekannten Luftzerlegungsverfahren und-anlagen kurzzeitige Laständerungen durch Veränderung des Säulenumsatzes praktisch nicht möglich sind.

Die Rektifiziersäulen eines Luftzerlegers reagieren jedoch außerordentlich träge auf derartige Lastwechsel, so daß der Flexibilität von Sauerstoff- und Stickstoffproduktion enge Grenzen gesetzt sind. Außerdem entstehen bei Lastwechseln auch Einbußen an Ausbeute und Reinheit.

Durch den in jüngster Zeit aufgekommenen Einsatz von Packungen anstelle von konventionellen Rektifizerböden wurde eine gewisse Verbesserung im Anfahrverhalten und in der Flexibilität gegenüber Lastwechseln erreicht, da Packungen einen wesentlich geringeren Flüssigketsinhalt (Holdup) als Böden aufweisen. Allerdings weisen auch Packungssäulen eine unbefriedigend hohe Trägheit bei Laständerungen auf.

In der Vergangenheit wurden für spezielle Anwendungsfälle Verfahren entwickelt, die variable Produktionsmengen bei konstanter Belastung der Rektifiziersäulen ermöglichen. So beschreibt W. Rohde ein speziell an sehr große Schwankungen angepaßtes Luftzerlegungsverfahren mit Wechselspeicherung in den LINDE-Berichten 54 (1984), S.18-20; in diesem Fall wird der Produktsauerstoff direkt einem periodisch arbeitenden Sauerstoff-Blasverfahren in der Stahlindustrie zugeführt. Die in diesem Beispiel auftretenden sehr hohe Lastschwankungen von über 40% der Maximalkapazität des Luftzerlegers werden über Puffertanks ausgeglichen, wobei der Durchsatz durch die Rektifiziersäulen im wesentlichen konstant gehalten werden kann. Solche Anlagen mit Puffertanks sind jedoch apparativ und regelungstechnisch sehr aufwendig, insbesondere bei geringeren Lastschwankungen.

Der Erfindung liegt die Aufgabe zugrunde, eine Vorrichtung der eingangs genannten Art zu entwickeln, die eine hohe Flexibilität im Betrieb aufweist. Insbesondere soll sie relativ schnell auf Änderungen des Durchsatzes reagieren und/oder eine kurze Anfahrphase aufweisen, das heißt die Zeit zwischen dem Beginn des Anfahrens und dem Erreichen des stationären Betriebs soll möglichst kurz sein.

Diese Aufgabe wird durch eine gattungsgemäße Anlage mit den kennzeichnenden Merkmalen von Anspruch 1 gelöst.

Im Rahmen der Erfindung wurde entdeckt, daß die Schwachstelle hinsichtlich schneller Laständerungen bei den Flüssigkeitsverteilern liegt, die in der oder den Säule(n) oberhalb von Packungsabschnitten angeordnet sind und für eine möglichst gleichmäßige Verteilung der Rücklaufflüssigkeit auf den Kolonnenquerschnitt sorgen sollen. In Luftzerlegersäulen, die Packungen als Stoffaustauschelemente enthalten, kommt der Güte dieser Flüssigkeitsverteilung eine überragende Bedeutung zu. In gepackten Luftzeflegersäulen wurden bisher Kanalverteiler mit Ausflußöffnungen in den Böden und/ oder Seitenwänden der nach oben offenen Kanäle eingesetzt Ein derartiger Flüssigkeitsverteiler für den Einsatz bei der Luftzerlegung ist beispielsweise aus der EP-A-0 434 510 bekannt.

Ein Kanalverteiler arbeitet mit einer gewissen Füllstandshöhe in den Kanälen. Der damit verbundene hydrostatische Druck regelt die Flüssigkeitsmenge, die auf den darunterliegenden Packungsabschnitt tropft. Die Füllstandshöhe steigt etwa quadratisch mit der Flüssigkeitsbelastung (Flüssigkeitsvolumen pro Stunde) an. Da die Kanäle einen großen Teil des Kolonnenquerschnitts überdecken, enthält ein Kanalverteiler große Mengen an Flüssigkeit einer bestimmten Zusammensetzung (Konzentration). Dadurch wird die hohe Trägheit des Verteilers und damit der ganzen Rektifiziersäule gegenüber schnellen Laständerungen, wie sie bei Luftzerlegem häufig wünschenswert sind, verursacht. Es dauert nämlich lange Zeit, bis der neue stationäre Zustand, der mit einer höheren oder niedrigeren Füllstandshöhe verbunden ist, erreicht wird, weil dabei große Flüssigkeitsvolumina bei gleichbleibender Konzentration verändert werden müssen.

Gemäß der Erfindung wird nun in der Luftzerlegersäule ein Rohrverteiler eingesetzt, wie er beispielsweise aus einem Aufsatz von P. Bomioetal., Chem. Tech., 43.Jg., Heft 11/12, 1991 bekannt ist. Rohrverteiler weisen in der Regel ein vertikales Zuspeiserohr auf, von dem aus die Flüssigkeit in horizontal angeordnete Verteilrohre weitergeleitet wird. Die Verteilrohre überdecken einen großen Teil des Querschnitts der Säule und sind allseitig geschlossen. Lediglich durch Öffnungen an der Unterseite der Verteil rohre kann die Flüssigkeit austreten und auf den darunterliegenden Packungsabschnitt tropfen. Solche Rohrverteiler wurden bisher nur für bestimmte Einsatzzwekke vorgesehen, insbesondere bei kleinen Flüssigkeitsmengen von bis zu 1 m³/h. Eine Verwendung bei der Luftzerlegung und den dabei üblicherweise umgesetzten Flüssigkeitsmengen wurde bisher nicht erwogen.

Aufgrund von aufwendigen Untersuchungen hat es sich im Rahmen der Erfindung herausgestellt, daß die Nachteile eines Rohrverteilers geringer als erwartet ausfallen. Außerdem wurde gefunden, daß mit modernen Fertigungsmethoden Rohrverteiler hergestellt werden können, die den hohen Anforderungen an die Verteilgüte, wie sie bei der Luftzerlegung bestehen, auch bei mittlerer Flüssigkeitsmenge genügen. Insbesondere können die Ausströmöffnungen entsprechend präzise geferfigt werden. Ein Rohrverteiler mit hoher Verteilgüte kann daher auch bei den (mittleren) Flüssigkeltsmengen der Rektifiziersäule(n) eines industriellen Luftzerlegers eingesetzt werden; solche Flüssigkeitsmengen liegen in der Regel über 5 m³/h, vorzugsweise über 15 m³/ h; bei großen Luftzerlegem werden auch weit höhere Flüssigkeitsdurchsätze erreicht, beispielsweise 250 m³/ h und auch darüber. Der grundlegende Vorteil des Rohrverteilers liegt darin, daß der für die Verteilung notwendige hydrostatische Druck lediglich durch die in dem vertikalen Zuspeiserohr anstehende Flüssigkeit erzeugt wird. Der Flüssigkeitsinhalt des Verteilers im stationären Betrieb ist daher sehr gering. Er beträgt etwa 25 bis 50% desjenigen eines Kanalverteilers gleicher Verteilgüte.

Besonders wichtig ist jedoch das Verhalten eines Rohrverteilers bei einer Laständerung. Der Flüssigkeitsstand ändert sich lediglich in dem Zuspeiserohr, also auf sehr niedriger Querschnittsfläche (5% im Vergleich zu einem Kanalverteiler). Die Änderung des Flüssigkeitsinhalts ist daher auch bei großen relativen Laständerungen außerordentlich gering. Der Flüssigkeitsinhalt des Verteilers stellt sich daher innerhalb sehr kurzer Zeit auf einen neuen stationären Zustand ein. Damit sind insgesamt schnelle Laständerungen praktisch ohne Beeinträchtigung der Produktkonzentrationen und -ausbeuten sowie kurze Anfahrzeiten möglich. In dem neuen Luftzerleger können beispielsweise Laständerungen in 10 bis 25 Sekunden pro Prozent Laständerung vorgenommen werden, das heißt 50% Laständerung in etwa 10 bis 20 Minuten. (Als Maß für die Laständerung dient beispielsweise die Verringerung oder Erhöhung der Menge des in die Rektifiziersäule eingespeisten Einsatzfluids; entsprechend ändern sich selbstverständlich auch die Produktmengen und sonstigen Umsätze.)

Zusätzliche Vorteile ergeben sich durch das geringere Gesamtgewicht des erfindungsgemäß eingesetzten Flüssigkeitsverteilers gegenüber einem konventionellen Kanalverteiler. Einerseits bedeutet beispielsweise der Einsatz eines Rohrverteilers anstatt eines konventionellen Kanalverteilers eine Gewichtsersparnis von etwa 50% bei der Verteilerkonstruktion. Der Verteiler ist dadurch leichter und präziser justierbar, es kann eine relativ wenig aufwendige Nivelliereinrichtung verwendet werden. Noch stärker ist jedoch die Verringerung des Gesamtgewichts, der Summe aus Verteilergewicht und Gewicht seines Flüssigkeitsinhalts. Dadurch können außerordentlich kostengünstige Befestigungsvorrichtungen eingesetzt werden.

Ein besonders geeigneter Rohrverteiler weist mindestens ein im wesentlichen horizontales Hauptrohr und eine Vielzahl von ebenfalls im wesentlichen horizontalen Verteilrohren auf, die mit dem Hauptrohr in Strömungsverbindung stehen und Öffnungen aufweisen, wobei die Verteilrohre eine maximale Ausdehnung b in horizontaler Richtung senkrecht zur Verteilrohrachse aufweisen. Die Verteilrohre weisen einen Querschnitt auf, dessen Fläche größer ist als die Fläche eines Kreises mit Dürchmesser b.

Dieser Rohrverteiler kann praktisch an jeden Kolonnenquerschnitt angepaßt werden, indem die Höhe der Verteilkanäle variiert wird, während ihre Breite gleichbleibt. Die Anpassung übt damit keinen Einfluß auf die Gasströmung aus, insbesondere wird deren Druckverlust nicht erhöht Auch die Erhöhung des Flüssigkeitsinhalts fällt bei gleichbleibender Rohrbreite kaum ins Gewicht, zumal dieser Flüssigkeitsinhalt auch bei veränderter Flüssigkeitsbelastung konstant bleibt, solange der Flüssigkeitsstand im Zuspeiserohr oberhalb des oberen Randes der Verteilrohre liegt. Der Vorteil großer Flexibilität bei Laständerungen bleibt erhalten.

Gemäß einer Weiterbildung der Erfindung können die Verteilrohre des Rohrverteilers einen im wesentlichen rechtwinkligen Querschnitt aufweisen. Dadurch können handelsübliche Rechteckprofile zur Herstellung des Verteilers verwendet werden. Diese sind wesentlich einfacher zu bearbeiten als Rohre mit beispielsweise rundem oder ovalem Querschnitt, insbesondere können die Öffnungen für den Austritt der Flüssigkeit ohne großen Aufwand sehr genau ausgerichtet werden. Insgesamt ist eine besonders kostengünstige Fertigung möglich. Die Höhe des Rechtecks kann beispielsweise größer als die Breite sein, auch eine quadratische Form des Querschnitts ist anwendbar.

Bei den bisher bekannten Rohrverteilern werden beiderseits des Hauptrohres Verteilrohre in Aussparungen eingesetzt, die die Form des Querschnitts der Verteilrohre aufweisen. Der untere Rand der Verteilrohre liegt dabei höher als der untere Rand des Hauptrohres. Dadurch tritt im Bereich des Hauptrohres keine Flüssigkeit aus; je nach Breite des Hauptrohres kann die Homogenität der Flüssigkeitsverteilung erheblich gestört sein.

Es hat sich im Rahmen der Erfindung als vorteilhaft erwiesen, wenn das Hauptrohr an seiner Unterseite Aussparungen aufweist, in die die Verteilrohre eingesetzt sind, wobei die Verteilrohre ihrerseits im Bereich dieser Aussparungen an ihrer Oberseite Überströmöffnungen aufweisen, die die Strömungsverbindung zwischen Hauptrohr und Verteilrohren herstellen. Dabei können die Verteilrohre durchgehend über im wesentlichen den gesamten Kolonnendurchmesser hergestellt und brauchen nicht am Hauptrohr unterbrochen zu werden. Es ergibt sich dadurch eine sehr hohe Verteilgüte, auch im Bereich unterhalb des Hauptrohres.

Daneben ist es mit relativ niedrigem fertigungstechnischen Aufwand möglich, die Verteilrohre mit dem Hauptrohr zu verbinden und exakt horizontal auszurichten. Beispielsweise können bei rechteckigen Verteilrohren die Aussparungen durch einen Scheibenfräser erzeugt werden. Die Verteilrohre können allein durch paßgenaues Einsetzen in diese Aussparungen in ihre horizontale Lage gebracht werden, wodurch eine genau vertikale Ausrichtung der Öffnungen für den Flüssigkeitsaustritt sichergestellt ist.

Die erfindungsgemäße Luftzerlegungsanlage kann eine als Doppelsäule ausgebildete Rektifiziersäule aufweisen, die aus einer Drucksäule und einer Niederdrucksäule besteht und mindestens eine Zuführleitung für Luft und Produktleitungen für Stickstoff und Sauerstoff aufweist. Die Niederdrucksäule, in der der Einsatz von Packungen besonders vorteilhaft ist, kann einen Rohrverteiler enthalten.

Der Luftzerleger kann außerdem mit einer Rohargonsäule ausgestattet sein, die im Falle einer Doppelsäulenanlage mit der Niederdrucksäule verbunden ist. Falls in der Rohargonsäule Packungen oder Füllkörper zum Einsatz kommen, ist es vorteilhaft, den oder die Flüssigkeitsverteiler als Rohrverteiler auszubilden. Insbesondere die hohe Verteilgüte eines Rohrverteilers wirkt sich günstig auf die Effizienz der Sauerstoff-Argon-Trennung aus.

Die Erfindung kann bei allen Arten von Luftzerlegungsverfahren und -anlagen vorteilhaft eingesetzt werden, bei Einzelsäulen- oder Doppelsäulenverfahren wie bei Verfahren mit anschließender Rohargonsäule. Ein oder mehrere Rohr-Flüssigketsverteiler können dabei in der Druck-, Niederdruck- und/oder Rohargonsäule und/oder in weiteren dem Luftzerleger angeschlossenen Kolonnen eingesetzt werden. Hinsichtlich von Ausführungsbeispielen von Luftzerlegungsverfahren und -anlagen mit Einsatz von Packungen wird auf die ältere deutsche Patentanmeldung P4224068.9 verwiesen.

Die Erfindung wird im folgenden anhand von Zeichnungen, die spezielle Ausführungsbeispiele betreffen, näher erläutert. Hierbei zeigen:
- Figur 1: den schematischen Aufbau eines Rohr-Flüssigkefisverleilers,
- Figur 2: das Verhalten verschiedenartig ausgestatteter Rektifiziersäulen bei Laständerungen hinsichtlich des Flüssigkefisinhalts,
- Figur 3: ein Ausführungsbeispiel für die erfindungsgemäße Weiterentwicklung eines Rohrverteilers in schematischer perspektivischer Darstellung,
- Figur 4: einen Schnitt durch diesen Rohrverteiler in einer vertikalen Ebene und

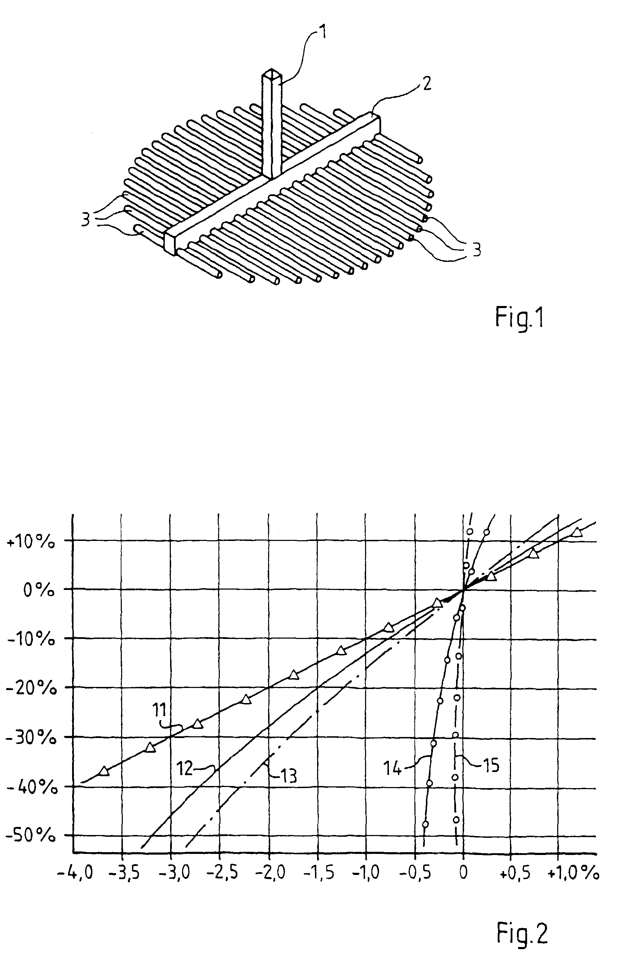

Derprinzipielle Aufbau eines Rohrverteilers ist in Figur 1 dargestellt Die Rücklaufflüssigkeit wird durch geeignete Mittel in ein Zuspeiserohr 1 eingeleitet, das im wesentlichen vertikal ausgerichtet ist. Von dort aus strömt die Flüssigkeit weiter in eine Vielzahl von Verteilrohren 3. Im Falle des in Figur 1 dargestellten Typs geschieht dies über ein Hauptrohr 2. Die Verteilrohre 3 besitzen an ihrer Unterseite Öffnungen, durch die Flüssigkeit nach unten austreten kann. In der Regel beträgt die Anzahl der Verteilrohre 5 bis 25, vorzugsweise 10 bis 20 Verteilrohre pro Meter Hauptrohrlänge). Sie überdekken einen wesentlichen Teil (beispielsweise 15 bis 80 %, vorzugsweise 30 bis 60 %) der Querschnttsfläche der Rektifiziersäule.

Die Verteilrohre des in Figur 1 dargestellten Rohrverteilers besitzen einen kreisförmigen Querschnitt. Es sind jedoch auch andere Querschnitte denkbar, wie weiter unten erläutert wird.

Das Diagramm von Figur 2 zeigt den Flüssigkeitsinhalt (Holdup) einer Packungskolonne in Abhängigkeit von der Flüssigkeitsbelastung. Auf der horizontalen Achse sind dabei die Laständerungen in Bezug auf eine Grundlast (Nullpunkt) in m³ pro m³ Kolonnenvolumen angegeben. Die flachen Kurven zeigen eine starke Abhängigkeit des Flüssigkefisinhalts von der Flüssigkeitsbelastung und damit ein träges Lastwechselverhalten an. Die Kurven beziehen sich auf verschiedene Einbauten:
- Kurve 11: Siebböden
- Kurve 12: konventioneller Kanalverteiler mit Packung
- Kurve 13: konventioneller Kanalverteiler alleine (ohne Packung)
- Kurve 14: Rohrverteiler mit Packung
- Kurve 15: Rohrverteiler alleine (ohne Packung)

Die verwendete Packung ist in allen Fällen der Figur 2 eine geordnete.

Eine mit einer geordneten Packung ausgestattete Rektifiziersäule sollte wegen des relativ geringen Flüssigkeitsinhalts der Packung ein deutlich verbessertes Lastwechselverhalten gegenüber einer Siebbodensäule aufweisen. Wie sich im Rahmen der Erfindung durchgeführten Messungen und Berechnungen herausstell- te, ist dies jedoch nicht der Fall, wenn in der Packungssäule konventionelle Kanalverteiler eingesetzt werden (Kurven 12 und 13 im Vergleich zu Kurve 11). Der Flüssigkeitsinhalt eines Rohrverteilers ist dagegen fast unabhängig von der momentanen Belastung (Kurve 15). Auch wenn man den Flüssigkeitsinhalt von Rohrverteiler und Packung summiert, ergibt sich noch ein sehr günstiges Lastwechselverhalten (Kurve 14).

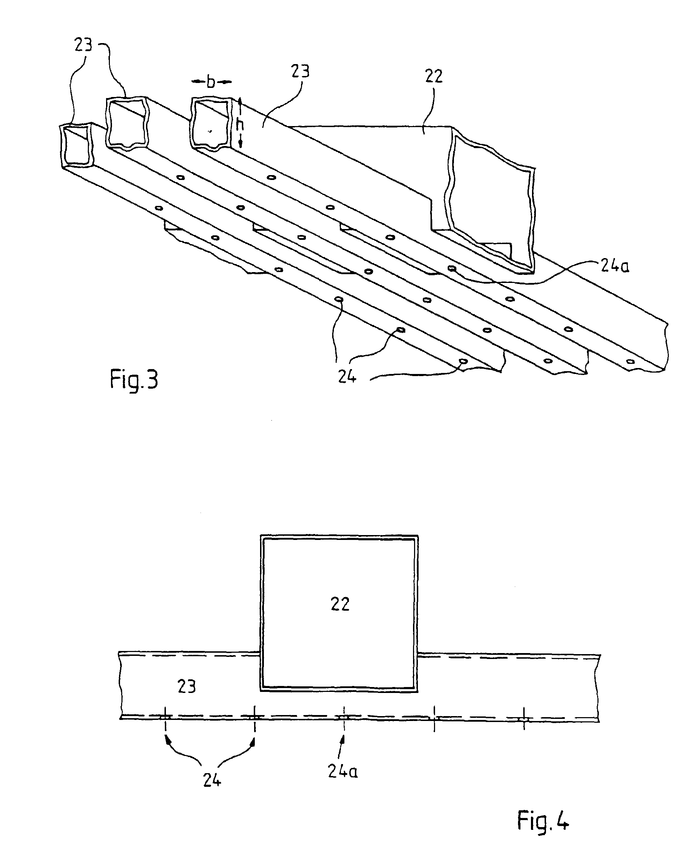

Der im Rahmen der Erfindung entwickelte neue Rohrverteiler ist in Ausschnitten in den Schemazeichnungen der Figuren 3 und 4 dargestellt. Er weist in der Regel ein Zuspeiserohr wie der konventionelle Rohrverteiler von Figur 1 auf, das in den Zeichnungen nicht gezeigt ist. Auch der weitere Grundaufbau eines Rohrverteilers mit Hauptrohr 22, Verteilrohren 23 und an der Unterseite der Verteilrohre 23 angeordneten Öffnungen 24 für den Flüssigkeitsaustritt ist in dem neuen Verteiler wiederzufinden.

Allerdings weicht der Querschnitt der Verteilrohre 23 von der bisher bekannten Kreisform ab: Die Höhe h ist größer als die Breite b. (Bei nicht-rechtwinkligen Querschnitten zählen jeweils die maximalen Abmessungen in vertikaler und horizontaler Richtung senkrecht zur Achse des Verteilrohrs 23.) Das Verhältnis h/ b beträgt 1 bis 10, vorzugsweise etwa 1 bis 3. Dadurch ist die Querschnittsfläche senkrecht zur Strömungsrichtung größer als bei einem Verteilrohr mit kreisförmigem Querschnitt und gleicher Breite (Durchmesser b).

Die Verteilrohrbreite b kann beispielsweise 15 bis 100 mm, vorzugsweise 20 bis 60 mm betragen. Es können grundsätzlich Rektifiziersäulen mit beliebig großem Durchmesser mit dem erfindungsgemäßen Rohrverteiler ausgestattet werden; möglich sind zum Beispiel Säulendurchmesser von 1 bis 6 m, auch bei Rektifiziersäulen mit noch größeren Querschnitten, beispielsweise Durchmesser von 7 bis 8 m, ist die Erfindung realisierbar. Bei einem hohen Säulendurchmesser kann die zulässige maximale Strömungsgeschwindigkeit in den Rohren 23 nämlich durch eine entsprechende Vergrößerung der Höhe h eingehalten werden. Bei der industriellen Luftzerlegung kommen üblicherweise Verteilrohre einer Breite b von etwa 40 mm vor, beispielsweise in der Niederdrucksäule eines zweistufigen Verfahrens oder in einer Rohargonsäule.

Durch die rechtwinklige Form der Verteilrohre 23 läßt sich ein besonders günstiger Anschluß zum Hauptrohr herstellen. Die Verteilrohre 23 müssen nicht paarweise gegenüber in das Hauptrohr 22 eingesetzt werden, sondern laufen an der Unterseite des Hauptrohrs 22 durch. Neben einer kostengünstigen Herstellung wird dadurch auch die Verteilgüte gegenüber konventionellen Rohrverteilern verbessert: Es befinden sich nämlich auch unterhalb des Hauptrohrs 22 Austrittsöffnungen 24a.

## Patentansprüche

1. Anlage zur Tieftemperaturzerlegung von Luft mit mindestens einer Rektifiziersäule, die wenigstens einen Abschnitt aufweist, der mit Füllkörpern oder mit einer Packung ausgestattet ist, wobei oberhalb dieses Abschnitts ein Flüssigkeitsverteiler zur möglichst gleichmäßigen Verteilung von Rücklaufflüssigkeit auf den Säulenquerschnitt angeordnet ist, der mindestens einen Hauptkanal und eine Vielzahl von Verteilkanälen aufweist, die mit dem Hauptkanal in Strömungsverbindung stehen, **dadurch gekennzeichnet,** daß der Hauptkanal (2, 22) und die Verteilkanäle (3, 23, 33) des Flüssigkeitsverteilers mindestens über einem Teil ihres Querschnitts nach oben abgeschlossen sind und daß der Flüssigkeitsverteiler als Rohrverteiler ausgebildet ist.

2. Anlage nach Anspruch 1, **dadurch gekennzeichnet**, daß der Rohrverteiler mindestens ein im wesentlichen horizontales Hauptrohr (22) und eine Vielzahl von Verteilrohren (23) aufweist, die mit dem Hauptrohr (22) in Strömungsverbindung stehen und Öffnungen (24, 24a) aufweisen, wobei die Verteilrohre (23) eine maximale Ausdehnung b in horizontaler Richtung senkrecht zur Verteilrohrachse aufweisen, sowie einen Querschnitt, dessen Fläche größer ist als die Fläche eines Kreises mit Durchmesser b.

3. Anlage nach Anspruch 2, **dadurch gekennzeichnet,** daß die Verteilrohre (23) einen im wesentlichen rechtwinkligen Querschnitt aufweisen.

4. Anlage nach Anspruch 2 oder 3, **dadurch gekennzeichnet**, daß das Hauptrohr (22) an seiner Unterseite Aussparungen aufweist, in die die Verteilrohre (23) eingesetzt sind, wobei die Verteilrohre (23) ihrerseits im Bereich dieser Aussparungen an ihrer Oberseite Überströmöffnungen aufweisen, die die Strömungsverbindung zwischen Hauptrohr (22) und Verteilrohren (23) herstellen.

## Claims

1. Plant for the low-temperature fractionation of air having at least one rectifying column which has at least one section which is equipped with dumped packings or with an arranged packing, above this section a liquid distributor being arranged for distributing reflux liquid as uniformly as possible on the column cross section, which liquid distributor has at least one main channel and a multiplicity of distribution channels which are flow-connected to the main channel, characterized in that the main channel (2, 22) and the distribution channels (3, 23, 33) of the liquid distributor are closed at the top over at least a part of their cross-section and in that the liquid distributor is constructed as a pipe distributor.

2. Plant according to Claim 1, characterized in that the pipe distributor has at least one essentially horizontal main pipe (22) and a multiplicity of distribution pipes (23) which are flow-connected to the main pipe (22) and have orifices (24, 24a), the distribution pipes (23) having a maximum extension b in a horizontal direction perpendicular to the distribution pipe axis, and a cross-section whose area is greater than the area of a circle having diameter b.

3. Plant according to Claim 2, characterized in that the distribution pipes (23) have an essentially right-angled cross-section.

4. Plant according to Claim 2 or 3, characterized in that the main pipe (22) has recesses on its lower side, into which recesses the distribution pipes (23) are inserted, the distribution pipes (23) themselves having, in the region of these recesses, overflow orifices on their upper side, which overflow orifices make the flow connection between main pipe (22) and distributor pipes (23).

## Revendications

1. Dispositif pour la séparation d'air à basse température comprenant au moins une colonne de rectification qui présente au moins une portion munie de corps de remplissage ou d'un garnissage, un distributeur de liquide étant disposé au-dessus de cette portion pour la distribution aussi régulière que possible de liquide de reflux sur la section de la ou des colonne (s), et présentant au moins un canal principal et une pluralité de canaux de distribution, qui communiquent fluidiquement avec le canal principal, caractérisé en ce que le canal principal (2, 22) et les canaux de distribution (3, 23, 33) du distributeur de liquide sont fermés sur le dessus au moins sur une portion de leur section transversale et en ce que le distributeur de liquide est conçu en tant que distributeur à tuyaux.

2. Dispositif selon la revendication 1, caractérisé en ce que le distributeur à tuyaux présente au moins un tuyau principal (22) essentiellement horizontal et une pluralité de tuyaux de distribution (23), qui communiquent fluidiquement avec le tuyau principal (22) et présentent des ouvertures (24, 24a), les tuyaux de distribution (23) présentant une dimension maximale b dans la direction horizontale perpendiculairement à l'axe des tuyaux de distribution, ainsi qu'une section transversale dont l'aire est supérieure à l'aire d'un cercle de diamètre b.

3. Dispositif selon la revendication 2, caractérisé en ce que les tuyaux de distribution (23) présentent une section transversale essentiellement rectangulaire.

4. Dispositif selon la revendication 2 ou 3, caractérisé en ce que le tuyau principal (22) présente des évidements sur sa face inférieure, dans lesquels les tuyaux de distribution (23) sont emboîtés, les tuyaux de distribution (23) présentant pour leur part, dans la zone de ces évidements, des ouvertures d'écoulement de trop plein sur leur face supérieure, qui réalisent la communication fluidique entre le tuyau principal (22) et les tuyaux de distribution (23).
